# EUROPEAN PATENT APPLICATION

(11) **EP 1 031 500 A1**
(43) Date of publication of application: **30.08.2000**
(21) Application number: 00301295.2
(22) Date of filing: 18.02.2000
(51) Int. Cl.: B62J 11/00

(54) **Guards and security devices for securing helmets**

(30) Priority: 23.02.1999 GB 9904159
(71) Applicant: Helmet Security Limited, Channel Islands GY9 3UX (GB)
(72) Inventor: Fielder, John David, Alderney, Channel Islands GY9 3US (GB); Smart, John, Alderney, Channel Islands GY9 3UR (GB)
(74) Representative: Faulkner, Thomas John

(57) **Abstract**

A guard 2 for securing a helmet 3 comprising cradle means having a plurality of first elongate flexible member portions 41, 51 for receiving a helmet 3, and tightening means 6 for shortening at least one of the plurality of first flexible member portions and tightening the cradle means around a helmet disposed therein.

## Description

This invention relates to guards and security devices for securing helmets, particularly for securing motorcycle or push cycle helmets to other objects.

Motorcycle crash helmets and push cycle helmets are worn by nearly all riders and there is a general problem regarding what should be done with the helmet once the cycle is parked. It a helmet is simply left unattended there is a high probability that it will be stolen. It is therefore desirable to have some means for securing the helmet to another object, for example the cycle itself.

On the other hand there is a limited amount of storage and carrying space on a motorcycle and especially on a push cycle so it is desirable if the securing means is relatively small and/or can be collapsed.

US Patent 3 831 407 discloses a helmet guard which comprises a number of interlinked chains which form a cage-like receptacle into which a helmet may be placed. This cage can then be locked to the frame of a cycle using an integral locking means. Such a guard has disadvantages. It is complex to make, it is difficult to use and not adjustable for different sizes of helmets and the locking means is arranged in such a way that the positions at which the cage can be fastened to another object are limited.

It is a object of the present invention to provide means for a securing helmet which alleviate at least some of the problems of the prior art.

According to a first aspect of the present invention there is provided a guard for securing a helmet comprising, cradle means having a plurality of first elongate flexible member portions for receiving a helmet; and tightening means for shortening at least one of the plurality of first flexible member portions and tightening the cradle means around a helmet disposed therein.

This arrangement provides a quick and simple way to introduce and secure a helmet in the guard. Such a guard can be arranged to be easily collapsible.

Preferably the cradle means comprises a ring portion. The ring portion may be arranged so that a helmet can be disposed thereon. The ring portion may be dimensioned to encircle part of an inserted helmet. The ring portion may be substantially rigid. The ring portion may be mounted on at least one of the first elongate flexible member portions. Preferably the ring portion is mounted on all of the first flexible member portions. The ring portion may be arranged to hold spacings between the first flexible member portions at the ring portion substantially constant. The first elongate flexible member portions may pass through apertures provided in the ring portion.

These features help to define the shape of the cradle and the positioning of the first flexible member portions relative to an inserted helmet.

Preferably the cradle means is arranged to substantially surround an inserted helmet.

The tightening means may be moveable relative to at least one first flexible member portion.

The tightening means may be mounted on at least one of the first flexible member portions. The tightening means may be slidably mounted on at least one of the first flexible member portions. Preferably the tightening means is mounted on all of the first flexible member portions.

The tightening means may comprise a tightening member having a plurality of apertures each of which is arranged to receive a first flexible member portion.

The cradle means may comprise an elongate flexible member which comprises the plurality of first flexible member portions. The cradle means may comprise a plurality of elongate flexible members. Each flexible member may comprise one of the plurality of first flexible member portions. Preferably the cradle means comprises four first flexible member portions. The cradle means may comprise two elongate flexible members each of which comprises two first flexible member portions. The cradle means may comprise one elongate flexible member which comprises four first flexible member portions.

Preferably the guard comprises at least one anchorage portion for facilitating the securing of the guard and an inserted helmet to another object.

The anchorage portion may comprise at least one second elongate flexible member portion arranged for passing around a suitable portion of another object.

The guard may comprise an elongate flexible member which comprises at least one of the plurality of first elongate flexible member portions and the second elongate flexible member portion. The tightening means and/or the ring portion may be mounted on said flexible member.

The guard can be arranged so that the length of the second elongate flexible member portion is adjustable by moving the tightening means.

The guard can be arranged so that shortening said one first flexible member portion lengthens the second elongate flexible member portion.

The tightening means may compromise first locking means for locking the tightening means against movement relative to said one first flexible member portion.

The guard may comprise second locking means for locking the guard to another object. The second locking means may be mounted on the tightening means. The second locking means may be a padlock.

The guard may be arranged so that when the guard and a helmet disposed therein are locked to another object, the tightening means is substantially locked against movement relative to said one first flexible member portion.

In some embodiments the guard comprises two anchorage portions each of which comprises a second elongate flexible member portion. The tightening means may be arranged to be moveable relative to said one first flexible member portion when the two second elongate flexible member portions are in a first position and to be substantially prevented from lengthening said one first flexible member portion by moving relative thereto when the two second elongate flexible member portions are in a second position.

The positions may be such that the two second elongate flexible member portions are spaced further from one another when in the second position than when in the first position.

The two second elongate flexible member portions may be substantially parallel in the first position and may be splayed in the second position.

The guard can be a helmet guard.

According to another aspect of the invention there is provided a security device for securing a helmet to another object comprising a guard of said one aspect of the invention and second locking means for locking the guard to another object.

Embodiments of the present invention will now be described, by way of example only, with reference to the accompanying drawings in which:
Figure 1 shows a schematic view of a security device comprising a guard enclosing a helmet and a padlock;
Figure 2 is a schematic view of the security device of Figure 1 without the helmet in place;
Figure 3A is a plan view of a ring portion of the security device shown in Figure 1;
Figure 3B is a side view of the ring portion shown in Figure 3A;
Figure 4A is a side view of a tightening member of the security device shown in Figure 1;
Figure 4B is an end view of the tightening member shown in Figure 4A;
Figure 5 is a partial schematic view of the security device of Figure 1 showing the tightening member locked against movement by splayed flexible member portions; and
Figure 6 is a schematic view of a second security device with a helmet inserted.

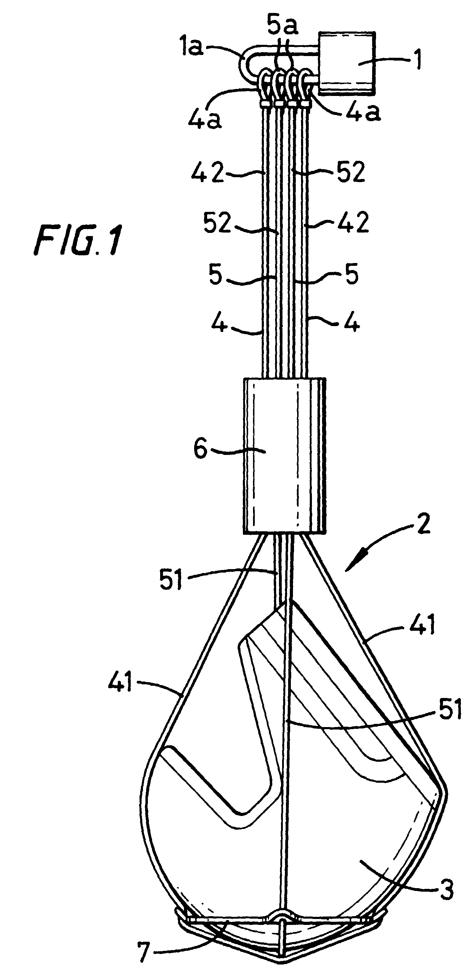

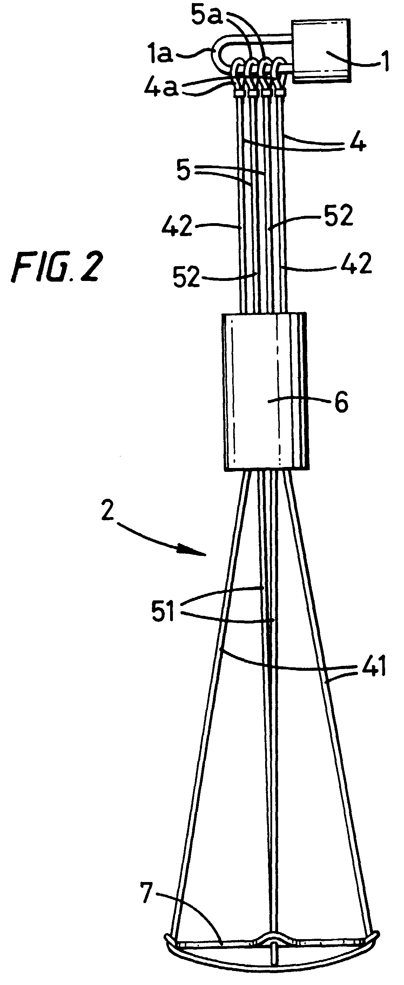

Figures 1 and 2 show a security device which generally comprises a padlock 1 and a guard 2 for receiving a helmet 3.

The guard 2 comprises two elongate flexible members 4,5, and a tightening member 6 and ring portion 7 which are mounted on the elongate flexible members 4,5. The elongate flexible members 4,5 and the ring portion 7 form cradle means for receiving the helmet 3.

Each end of each elongate flexible member 4,5 terminates in a loop 4a,5a which is suitable for passing over the hook member 1a of a padlock 1. Each elongate flexible member 4,5 is made of vinyl coated bowden type cable which is toughened and therefore hard to cut.

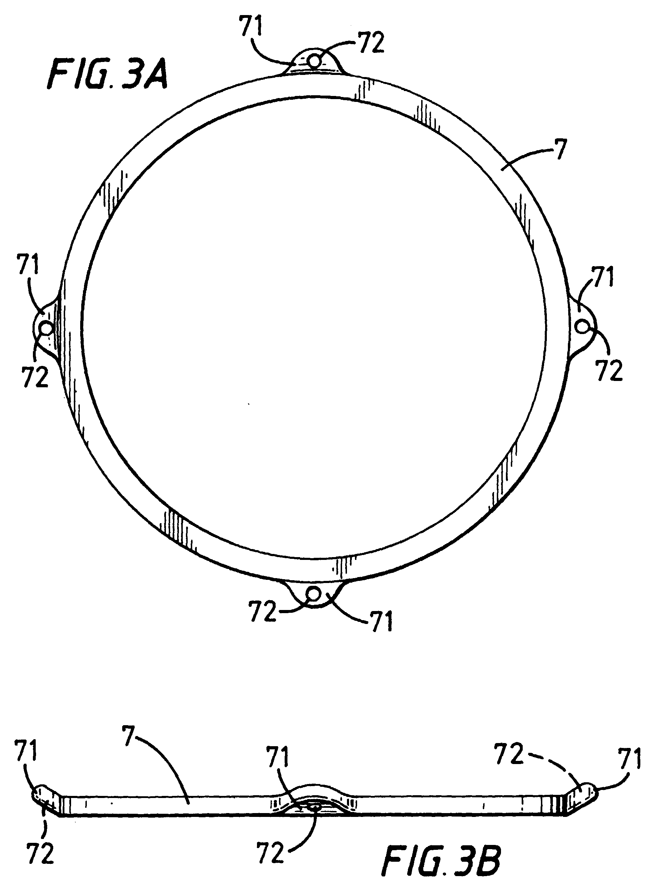

Referring to Figures 2, 3A and 3B, the ring portion 7 comprises a generally circular portion having a diameter similar to the overall size of the helmet 3 to be inserted and four tabs 71. Each of tabs 71 is provided with an elongate flexible member receiving aperture 72. The ring portion 7 is formed of vinyl coated case hardened steel, which is extremely hard to cut. The ring portion 7 is shaped and dimensioned so that, as shown in Figure 1, an inserted helmet 3 sits on the ring portion 7 in such a way that the ring portion 7 encircles part of the helmet 3. Each of the tabs 71 is inclined upwardly relative to the remainder of the ring portion 7 to enhance the cradling effect of the ring portion 7.

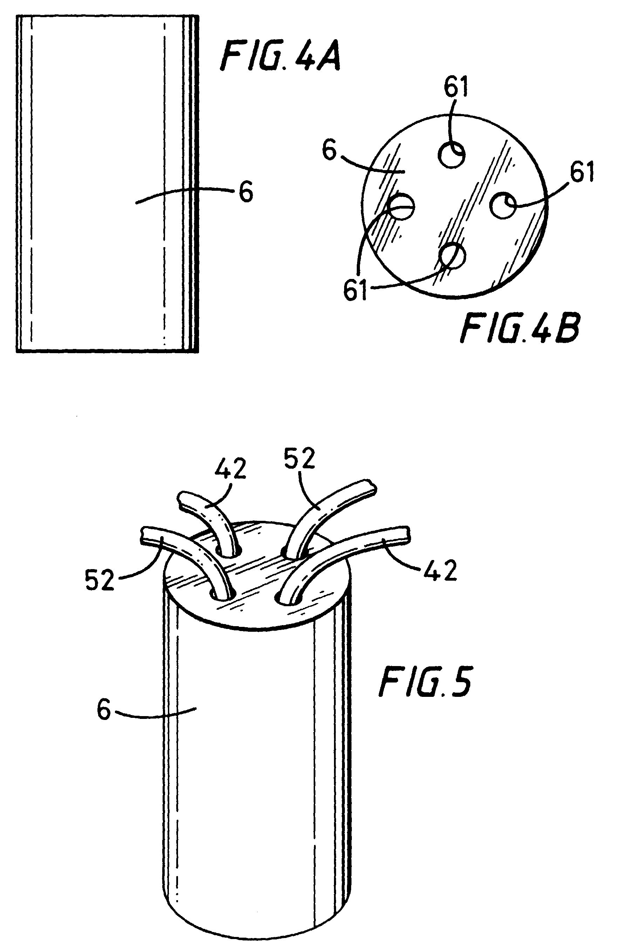

Referring to Figures 4A and 4B the tightening member 6 is generally cylindrical and comprises four axially aligned apertures 61, each of which runs the whole length of the tightening member 6 and receives a respective portion of one of the elongate flexible members 4,5. The dimensions of the apertures 61 are such that the elongate flexible members 4,5 can move freely through the apertures 61 when parallel to the axis of the tightening member 6. The tightening member 6 is formed of a vinyl coated toughened plastics material, such as Nylon 66 or an equivalent, which again is extremely hard to cut.

As shown in Figures 1 and 2 each of the elongate members 4,5 starts on one side of the tightening member 6, passes through a respective first aperture 61 of the tightening member 6 and then through a respective one of the apertures 72 of the ring portion 7. Each elongate member 4,5 returns through a diametrically opposed aperture 72 of the ring portion 7, back to the tightening member 6 and through a respective second aperture 61 of the tightening member which is diametrically opposed to the respective first aperture 61.

Each elongate flexible member comprises two first portions 41,51 which are disposed between the tightening member 6 and the ring portion 7 and which receive and surround an inserted helmet 3.

Furthermore, each flexible member 4,5 comprises two second flexible member portions 42,52 which extend from the tightening member 6 to the respective terminating loops 4a,5a. The four second elongate member portions 42,52 act as anchoring portions which may be wrapped around a wheel or frame of the cycle to which the helmet 3 and guard 2 is to be secured. The fact that each flexible member 4,5 passes through apertures 61,72 in the tightening member 6 and ring portion 7 helps to hold the first flexible member portions 41,51 in fixed positions relative to an inserted helmet. This ensures that the helmet cannot be removed by pushing the flexible members 4,5 apart.

To insert a helmet 3 into the guard 2 a user moves the tightening member 6 away from the ring portion 7 so that sufficient spaces are created between the first flexible member portions 41,51. The helmet 3 is then inserted and a portion of the helmet 3, in particular the top, is rested on the ring portion 7 so that the ring portion 7 encircles that part of the helmet 3, as shown in Figure 1. The guard 2 is then tightened around the helmet 3 by the user. Whilst grasping the free ends of the elongate flexible members 4,5 or the padlock 1, the user pushes the tightening member 6 down along the flexible members 4,5 towards the ring portion 7. This shortens the first member portions 41,51 and tightens the guard around the helmet 3. Once the tightening member 6 is in position the second member portions 42,52 can be wrapped around the wheel or frame of the cycle and the terminating loops 4a,5a can be locked together using the padlock 1.

It will be appreciated that using the security device to secure a helmet can also help to secure the cycle concerned. In particular, if the guard 2 and helmet 3 are secured through a wheel of the cycle, the security device has to be removed before the cycle can be ridden.

To prevent the first flexible member portions 41,51 undesirably lengthening whilst the helmet is secured to another object, the tightening member 6 is preferably wedged against the frame member or wheel of the cycle to which the guard 2 is locked.

Movement of the tightening member 6 away from the ring portions 7 is also prevented by splaying the second flexible member portions 42,52. Figure 5 shows the positions of the second flexible member portions 42,52 when the are parted strongly relative to one another to pass around the object to which the guard 2 and helmet 3 is to be locked. When the second member portions 42,52 are splayed in this manner, movement of the fastening member 6 away from the ring portion 7 is substantially prevented by the second member portions 42,52 themselves. Thus, even if the tightening member 6 is not forcefully abutted against a portion of the object to which the guard 2 is locked, movement of the tightening member 6 is prevented to a sufficient extent to prevent removal of the helmet 3 from the guard 2.

Because of the above considerations, it is not necessary to provide any extra components to act as a locking means to prevent relative movement between the tightening member 6 and the elongate flexible members 4,5. However, in alternatives such locking means against relative movement can be provided if it is desired.

In other alternatives differing numbers of elongate flexible members 4,5 and differing numbers of first member portions 41,51 can be provided. However, it has been found that the use of four first flexible member portions 41,51 is particularly advantageous in terms of effectively securing the helmet without introducing an unnecessary number of components.

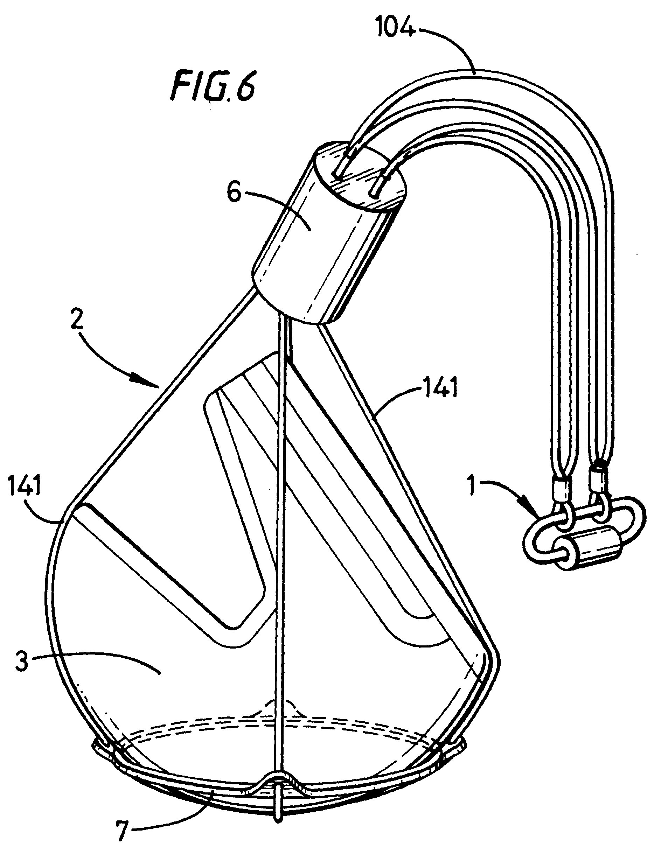

Figure 6 shows a second security device which is similar to the security device described above. Components in the second security device are designated by the same reference numerals as used in respect of corresponding components in the first security device. In Figure 6 the helmet 3 is shown inserted in the guard 2 before the guard 2 is fully tightened around the helmet 3.

The second security device differs from the first security device in that the ring portion 7 is of greater overall diameter so as to encircle an inserted helmet 3 at a position nearer the midpoint of the helmet 3. When the device is used to secure a motorcycle helmet 3 the ring portion 7 typically has an overall diameter in the order of 180 mm.

The second security device also differs from the first security device in that there is a single elongate flexible member 104 which is joined to form a loop and replaces the two elongate flexible members 4, 5 of the first security device. Thus the single elongate flexible member 104 provides four first member portions 141. The join in the single elongate member is captured within one of the collars which serve to form the loop eyes in the elongate member which are located over the hook member of the padlock.

A weatherproof bag may be used to protect the helmet. The helmet can simply be inserted in the bag and the bag containing the helmet can then be inserted and secured in the guard in the same way as the helmet alone. Thus the helmet can be completely surrounded by the bag and the bag and helmet can be secured as a whole.

In other alternatives rather than using the guard 2 with a separate padlock 1, a suitable locking means can be incorporated in the tightening member 6.

Although the use of bowden type cable for the elongate flexible members 4,5, harden plastic for the tightening member 6 and harden steel for the ring portion 7 are preferred, it will be appreciated that any suitable materials can be used for each of these components. Any components used should be chosen to serve the purpose of deterring a helmet thief for a sufficient period. The level of protection will be determined by the materials used. In general, a security device can be useful for deterring the casual thief, even if it might be overcome by a person with specialised equipment.

The dimensions of the device can be chosen such that a single device is suitable for a wide variety of different helmets. Different materials and/or dimensions can be used in a device for securing a push cycle helmet as opposed to a motorcycle helmet.

Bowden type cable is commercially available. It consists of a number of strands of stranded steel wire which are wound to form the cable.

## Claims

1. A guard for securing a helmet comprising cradle means having a plurality of first elongate flexible member portions for receiving a helmet, and tightening means for shortening at least one of the plurality of first flexible member portions and tightening the cradle means around a helmet disposed therein.

2. A guard according to Claim 1 in which the cradle means comprises a ring portion dimensioned and arranged to encircle part of an inserted helmet.

3. A guard according to Claim 2 in which the ring portion is mounted on the first flexible member portions.

4. A guard according to any preceding claim in which the tightening means is movable relative to at least one first flexible member portion.

5. A guard according to Claim 4 in which the tightening means is slidably mounted on at least one of the first flexible member portions.

6. A guard according to any preceding claim in which the tightening means comprises a tightening member having a plurality of apertures each of which is arranged to receive a first flexible member portion.

7. A guard according to any preceding claim which comprises an elongate flexible member which comprises at least one of the plurality of first elongate flexible member portions and at least one second elongate flexible member portion arranged for passing around a suitable portion of another object to facilitate the securing of the guard and an inserted helmet to another object.

8. A guard according to Claim 7 which comprises at least two second elongate flexible member portions and in which the tightening means is arranged to be moveable relative to said one first flexible member portion when the two second elongate flexible member portions are in a first position and to be substantially prevented from lengthening said one first flexible member portion by moving relative thereto when the two second elongate flexible member portions are in a second position.

9. A guard according to Claim 8 in which the two second elongate flexible member portions are substantially parallel in the first position and splayed in the second position.

10. A security device for securing a helmet to another object comprising a guard according to any preceding claim and locking means for locking the guard to another object.
